# EUROPÄISCHE PATENTSCHRIFT

(11) **EP 2 480 407 B1**
(45) Veröffentlichungstag und Bekanntmachung des Hinweises auf die Patenterteilung: **07.08.2013**
(21) Anmeldenummer: 10732247.1
(22) Anmeldetag: 17.06.2010
(51) Int. Cl.: B32B 3/24, E04B 1/80, F16L 59/065

(54) **ISOLIERFORMTEIL UND VERFAHREN ZU DESSEN HERSTELLUNG**
INSULATING MOLDED PART AND METHOD FOR THE PRODUCTION THEREOF
PIÈCE MOULÉE ISOLANTE ET SON PROCÉDÉ DE FABRICATION

(30) Priorität: 24.09.2009 AT 59409 U
(43) Veröffentlichungstag der Anmeldung: 01.08.2012
(73) Patentinhaber: Berghammer, Siegfried, 4030 Linz (AT)
(72) Erfinder: Berghammer, Siegfried, 4030 Linz (AT)
(74) Vertreter: KLIMENT & HENHAPEL
(86) Internationale Anmeldenummer: PCT/AT2010/000224
(87) Internationale Veröffentlichungsnummer: WO 2011/035352

(56) Entgegenhaltungen:
- DE-A1-102007 056 837

## Beschreibung

Die Erfindung betrifft einen Isolierformteil mit einem Oberteil und einem Unterteil, gemäß dem Oberbegriff von Anspruch 1. Die Erfindung umfasst ferner ein Verfahren zur Herstellung eines solchen Isolierformteils.

Es sind Isolierformteile bekannt, bei denen etwa aus Metall wabenartige Strukturen gefertigt werden, die in weiterer Folge evakuiert, also unter Unterdruck, vorzugsweise unter Vakuum, gesetzt werden. Isolierformteile dieser Art weisen aufgrund der schlechten Wärmeleitung evakuierter Hohlräume gute thermische Isolationseigenschaften auf. Aufgrund des metallischen Werkstoffes sind aber Wärmebrücken gegeben, des Weiteren weisen sie mitunter beträchtliches Gewicht auf, und sind in der Herstellung teuer. Des Weiteren sind Formteile bekannt, bei denen poröse Werkstoffe oder ein Granulat in einer luftundurchlässigen Folie verschweißt werden, und anschließend die eingeschlossene Luft abgesaugt wird. Formteile dieser Art weisen aber begrenzte Formbeständigkeit und Stabilität auf. Ferner sind zwei- und mehrteilige Formteile bekannt, bei denen durch Verwendung unterschiedlicher Werkstoffe ein Kompromiss zwischen Isolierfähigkeit und Stabilität gesucht wird. Formteile dieser Art bedingen aber wiederum einen hohen Fertigungsaufwand mit den damit verbundenen, höheren Fertigungskosten.

Es ist daher das Ziel der Erfindung, Isolierformteile bereit zu stellen, die die bekannten Nachteile vermeiden, insbesondere leicht und kostengünstig herstellbar sind, und dabei über gute Isolierfähigkeit und hohe Stabilität verfügen.

Diese Ziele werden durch die Merkmale von Anspruch 1 erreicht. Anspruch 1 bezieht sich hierbei auf einen Isolierformteil mit einem Oberteil und einem Unterteil, bei dem erfindungsgemäß vorgesehen ist, dass der Oberteil und der Unterteil als einteiliger Spritz- oder Druckgussteil ausgeführt sind, die in ihrem Inneren Hohlräume aufweisen, die als jeweils voneinander luftdicht abgetrennte Kammern ausgeführt sind. Vorzugsweise besteht in den Hohlräumen ein Unterdruck, da dadurch die Isolierfähigkeit erhöht wird. Spritz- oder Druckgussverfahren wurden bislang zur Herstellung von Isolierformteilen mit evakuierbaren Hohlräumen noch nicht vorgeschlagen, insbesondere ist die einteilige Ausführung von Isolierformteilen mithilfe dieser Verfahren noch nicht versucht worden. Es zeigt sich jedoch, dass die Herstellung eines erfindungsgemäßen Isolierformteils mithilfe von Spritz- oder Druckgussverfahren nicht nur möglich ist, sondern auch Isolierformteile ermöglicht, die bekannten Isolierformteilen hinsichtlich ihrer Isolierfähigkeit überlegen sind. Zudem sind Spritz- oder Druckgussverfahren kostengünstig durchführbar.

Aufgrund der Ausführung der Hohlräume als jeweils voneinander luftdicht abgetrennte Kammern wird nicht nur deren Herstellung erleichtert, wie im Folgenden noch näher erläutert werden wird, sondern auch eine leichtere Verarbeitung der erfindungsgemäßen Isolierformteile in der Praxis ermöglicht, da sie nach freier Wahl zugeschnitten werden können, ohne die Isolierfähigkeit des gesamten Formteiles zu beeinträchtigen. In den vom Zuschnitt betroffenen Kammern wird zwar Luft gelangen und den Unterdruck somit verringern, alle anderen Kammern bleiben davon aber unberührt und stehen aufgrund der luftdichten Abtrennung weiterhin unter Unterdruck. Der praktische Einsatz der erfindungsgemäßen Isolierformteile, insbesondere deren Montage, wird zusätzlich dadurch erleichtert, dass der Oberteil und der Unterteil jeweils quaderförmig ausgeführt sind, und der Oberteil gegenüber dem Unterteil geringfügig in diagonaler Richtung verschoben ist. Dadurch können sie einander überlappend angeordnet werden, etwa an einer Gebäudefassade, und als gut isolierende Gesamtfläche verbaut werden.

Gemäß einer bevorzugten Ausführungsform ist der Oberteil aus einem Verbundwerkstoff mit Beimengungen aus Naturstoffen oder Recyclingmaterial gefertigt. Unter Naturstoffen werden hier Materialien wie etwa Stein, Holz, Gras, Hanf, Ton, oder auch Erde verstanden, die bei entsprechender Vorbereitung, insbesondere Zerkleinerung, ohne weiteres für Spritz- oder Druckgussverfahren einsetzbar sind, und beim Oberteil, etwa über eine Dekoroberfläche, mit ansprechender Optik verarbeitet werden können. Als Recyclingmaterial können gängige Wertstoffe wie Altpapier, Karton, Kunststoffe, Metall, oder Glas verwendet werden. Vorzugsweise ist auch der Unterteil aus einem Verbundwerkstoff mit Beimengungen aus Naturstoffen oder Recyclingmaterial gefertigt.

Selbstverständlich ist hier auf die für Spritz- oder Druckgussverfahren erforderlichen Eigenschaften des Verbundwerkstoffes für den Ober- und Unterteil Rücksicht zu nehmen. Der Verbundwerkstoff muss für den Spritz- oder Druckgussvorgang über ausreichende Viskosität verfügen, des Weiteren werden erfindungsgemäß Temperaturbereiche vorgeschlagen, bei denen der Verbundwerkstoff aushärten soll. Darauf wird in weiterer Folge noch näher eingegangen werden, an dieser Stelle sei lediglich erwähnt, dass der Verbundwerkstoff in der Regel einen Anteil enthält, der auch als "Matrixharz" bezeichnet wird. Im Folgenden wird mitunter auch zwischen dem Matrixharz für den Oberteil und den Unterteil unterschieden, wenngleich mitunter auch derselbe Verbundwerkstoff für beide Teile verwendet werden kann.

Erfindungsgemäß wird auch ein Verfahren zur Herstellung eines Isolierformteils mit einem Oberteil und einem Unterteil vorgeschlagen. Hierbei ist vorgesehen, dass in einem ersten Verfahrensschritt im Rahmen eines Spritz- oder Druckgussverfahren der Verbundwerkstoff des Oberteils mit Beimengungen aus Naturstoffen oder Recyclingmaterial in eine erste Form eingebracht wird, und in einem zweiten Verfahrensschritt im Rahmen eines Schmelzkernverfahren der Verbundwerkstoff des Unterteils mit Beimengungen aus Naturstoffen oder Recyclingmaterial in eine zweite Form eingebracht wird, wobei die zweite Form einen Schmelzkern mit einzelnen Schmelzkörpern enthält, die über Öffnungen in der zweiten Form mit dem Äußeren in Verbindung stehen, und nach dem zweiten Verfahrensschritt die Schmelzkörper zur Bildung einzelner Kammern ausgeschmolzen werden. Die Öffnungen dienen in an sich bekannter Weise zum Abschmelzen der Schmelzkörper und zum Austritt des geschmolzenen Materials, etwa in einem Wärmebad, wobei in weiterer Folge Hohlräume in Form der Kammern verbleiben. Die erfindungsgemäße Kombination aus Spritz- oder Druckgussverfahren und Schmelzkernverfahren wurde zur Herstellung von Isolierformteilen mit kammerartigen Hohlräumen bislang noch nicht vorgeschlagen. Vorzugsweise wird nach dem Ausschmelzen des Schmelzkerns in den Kammern Unterdruck erzeugt, und danach ein luftdichter Abschluss der Kammern vorgenommen. Das Anlegen von Unterdruck dient nicht nur zur Evakuierung der Hohlräume, sondern bietet auch den Vorteil, dass Schmelzkernmaterial, sowie verunreinigende Dämpfe, die im Zuge des Aushärtens des Isolierformteiles entstehen, abgesaugt werden.

Vorzugsweise kann der Isolierformteil einer Nachhärtung mittels UV-Strahlung unterzogen werden.

Der Verbundwerkstoff des Oberteils und des Unterteils weist bei 25°C eine Viskosität von vorzugsweise 8.000-12.000 mPa.s (10.000 Centipoise) auf, und erhärtet bei einer Temperatur zwischen 93,3°C und 121,1°C (200°F und 250°F). Diese physikalischen Eigenschaften ermöglichen einen optimalen Einsatz für das erfindungsgemäß vorgeschlagene Verfahren.

Für die Zusammensetzung des Verbundwerkstoffs des Oberteils und des Unterteils wird vorgeschlagen, dass es ein Matrixharz umfassend ein flüssiges, phenolisches Harz, ein Glycidyl-terminiertes Epoxid-Verdünnungsmittel, sowie zumindest ein latentes Vernetzungsmittel enthält. Bei dem Epoxid-Verdünnungsmittel handelt es sich vorzugsweise um 1,4-Diglycidyloxybutan. Das latente Vernetzungsmittel wird vorzugsweise bei einer Temperatur zwischen 82°C und 121°C (180°F und 250°C) aktiviert, wobei Bortrichloridamin-Komplexe vorgeschlagen werden. Das Epoxid-Verdünnungsmittel ist hierbei vorzugsweise in einer Menge von 5-12 Gew.-% , vorzugsweise in einer Menge von 8-10 Gew.-%, vorzugsweise in einer Menge von 9 Gew.-%, der Gesamtmenge des Matrixharzes enthalten. Das latente Vernetzungsmittel ist vorzugsweise in einer Menge von 1-10 Gew.-%, vorzugsweise in einer Menge von 3-7 Gew.-%, vorzugsweise in einer Menge von 5 Gew.-%, der Gesamtmenge des Matrixharzes enthalten.

Die Erfindung wird im Folgenden anhand von Ausführungsbeispielen mithilfe der beiliegenden Zeichnungen näher erläutert. Es zeigen hierbei die
Fig. 1 eine Darstellung einer Ausführungsform eines erfindungsgemäßen Isolierformteils in drei unterschiedlichen Ansichten,
Fig. 2 eine vergrößerte Darstellung der Innenansicht in der linken, unteren Ecke der Fig. 1,
Fig. 3 eine Schnittansicht entlang der Linie A-A in der Fig. 1,
Fig. 4 eine perspektivische Ansicht eines erfindungsgemäßen Isolierformteils, und die
Fig. 5 eine vergrößerte Ansicht des Details "C" in der Fig. 3.

Der erfindungsgemäße Isolierformteil mit einem Oberteil 7 und einem Unterteil 8 kann unterschiedlichen Aufbau aufweisen. So können etwa Oberteil 7 und Unterteil 8 aus Verbundwerkstoffen unterschiedlicher Zusammensetzung gefertigt sein, oder der Oberteil 7 kann mit einer Dekoroberfläche ausgestattet sein. Des Weiteren können Oberteil 7 und Unterteil 8 mit zusätzlichen Isolierwänden 10 Versehen sein. Hierbei ist eine Form mit mehreren Kavitäten erforderlich, wobei in einem ersten Verfahrensschritt der Verbundwerkstoff des Oberteils 7 als Dekormaterial über Schnecken, bzw. bei Stein auch mit einem Druckzylinder, um das Granulat nicht zu zermahlen, in eine erste Form eingebracht wird. Hierzu wird unterstützend in der ersten Form Unterdruck erzeugt. Nachdem der Verbundwerkstoff des Oberteils 7 eingebracht wurde, wird die obere Formhälfte gewechselt, und eine zweite Form, der einen Schmelzkern mit einzelnen Schmelzkörpern enthält, auf die erste Form positioniert. Die beiden Formen werden zusammengepresst, und unter Unterdruck der Verbundwerkstoff des Unterteils 8 eingespritzt, das den Schmelzkern umgibt. Die einzelnen Schmelzkörper stehen über Öffnungen 1 in der zweiten Form mit dem Äußeren in Verbindung, sodass das Schmelzmaterial in weiterer Folge etwa in einem temperierten Schmelzbad entweichen kann. Über die Öffnungen 1, die etwa konisch ausgeführt sind, kann in weiterer Folge ein Unterdruck, vorzugsweise ein Vakuum, in den so entstandenen Hohlräumen der Kammern 3 erzeugt werden, wobei nicht nur restliches Schmelzkernmaterial, sondern auch jegliche, während des Härtungsverfahren erzeugte Dämpfe aus dem aushärtenden Verbundwerkstoff entzogen werden. Vorzugsweise wird in den Hohlräumen der Kammern 3 ein Unterdruck von etwa 5 mbar erzeugt, der aber je nach Wandstärke der Stege 4 zwischen den einzelnen Kammern 3 auch variieren kann. Die Öffnungen 1 können anschließend, etwa mit einem Vulkanisiermaterial, Kugeln aus Silikon, etc. luftdicht abgeschlossen werden. In den beiden Formen härtet der Verbundwerkstoff während der Anwendung des Unterdrucks ausreichend aus, sodass der fertige Isolierformteil problemlos entformt werden kann. Nach der Entnahme aus den Formen kann die Aushärtung unter UV-Strahlung abgeschlossen werden. Falls keine Dekoroberfläche gewünscht ist, ist lediglich eine einzige Form mit eingesetztem Schmelzkern notwendig.

Der Schmelzkern muss anfänglich gegossen oder gespritzt werden, um in der Form den gewünschten Isolierformteil aus den Verbundmaterialien erzeugen zu können. Der Schmelzkern besteht in an sich bekannter Weise aus einem bei vergleichsweise niedrigen Temperaturen schmelzenden Material, bekannt sind etwa Zinn-Wismut-Legierungen oder Wachsmaterialien. Der Schmelzkern wird in weiterer Folge in eine Form eingesetzt und mit dem Verbundwerkstoff ausgespritzt. Anschließend muss der Schmelzkern aus dem Kunststoffspritzteil ausgeschmolzen werden, was etwa auf elektro-induktivem Weg in einem aliphatischen Alkohol als Wärmeträger, oder mittels UV-Licht erfolgt. Die nicht von selbst aus den Hohlräumen der Kammern 3 ausfließenden Schmelzkernreste werden durch Schwenkbewegungen in der Wärmeträgerflüssigkeit entfernt. Das ausgeschmolzene Schmelzkernmaterial sammelt sich am Behälterboden in flüssiger Phase, und wird wieder der Gießanlage zugeführt, wodurch der Kreislauf für das Schmelzkernmaterial geschlossen ist.

Der Isolierformteil kann in einfacherer Ausführung auch ohne Isolierwände 10 hergestellt werden. Ist in diesem Fall eine Dekoroberfläche gewünscht, so sind zwei Formen mit je einer Kavität erforderlich, wobei wiederum zunächst der Verbundwerkstoff des Oberteils 7 über Schnecken oder Druckzylinder eingebracht wird. Je nach spezifischem Gewicht des Verbundwerkstoffs wird er dabei innerhalb der Form absinken oder aufsteigen. Nachdem der Verbundwerkstoff eingebracht wurde, wird die obere Hälfte der Form gewechselt, und eine zweite Form auf der ersten Form positioniert. Im Rahmen eines zweiten Spritzgussvorganges, der bereits im zähflüssigen Zustand des Verbundwerkstoffs des Oberteils 7 beginnen kann, wird nun der Verbundwerkstoff des Unterteils 8 eingespritzt, und die zweite Kavität aufgefüllt. Die Aushärtung des Verbundwerkstoffs beginnt bereits während des zweiten Spritzgussvorganges, und setzt sich in weiterer Folge so weit fort, dass der Isolierformteil problemlos entformt werden kann. Der erste und zweite Spritzgussvorgang werden dabei jeweils mittels Unterdruck unterstützt, wobei wiederum jegliche Dämpfe, die im Zuge des Aushärtens der jeweiligen Verbundwerkstoffe entstehen, entzogen werden. Falls keine Dekoroberfläche gewünscht wird, ist lediglich eine einzige Form mit einer Kavität notwendig.

Das Matrixharz des Verbundwerkstoffs muss für die erfindungsgemäße Anwendung eine sehr niedrige Injektionsviskosität besitzen. So genannte "Zweikomponenten"-Epoxidharzzusammensetzungen, in denen die Vernetzungs- und Harzkomponenten unmittelbar vor der Verwendung vereinigt werden müssen, könnten prinzipiell verwendet werden. Des Weiteren sind auch "Einkomponenten"-Epoxidharzzusammensetzungen bekannt, die bei kontrollierten niedrigen Temperaturen gelagert werden müssen, um Vernetzungsreaktionen zu verhindern und die Lagerungsdauer zu verlängern. Epoxidharz-basierende Zusammensetzungen, die als Matrixharze verwendet werden, umfassen zumindest ein aromatisches Polyepoxid, ein Fluorenthaltendes Epoxid und ein 9,9-Bis(Aminophenyl)fluoren-Härtungsmittel. Das Matrixharz ist eine schwere Paste, die erhitzt werden muss, damit sie in die Formen injiziert werden kann. Die Form muss dabei auf mindestens 176,7°C (350°F) erhitzt werden, um die Epoxidharz-basierende Zusammensetzung zu härten.

Erfindungsgemäß werden jedoch stabile Zusammensetzungen mit einer niedrigen Viskosität bei Raumtemperatur, und die bei Temperaturen zwischen 93,3 und 121,1°C (200 und 250°F) härtbar sind, bevorzugt. Hierfür werden Verbundwerkstoffe vorgeschlagen, die einen Matrixharz-Anteil umfassend ein flüssiges, phenolisches Harz, ein Glycidyl-terminiertes Epoxid-Verdünnungsmittel, und zumindest ein latentes Vernetzungsmittel enthalten, sowie Beimengungen aus Naturstoffen oder Recyclingmaterial.

Geeignete phenolische Harze sind etwa Epoxidharze umfassend Epoxidnovolake wie Araldite® EPN 1138 (Epoxidwert 0,55 bis 0,57 Äqu./100 g), Araldite® EPN 1139 (Epoxidwert 0,56 bis 0,58 Äqu./100 g) und DEN® 438 (Epoxidwert 0,55 bis 0,57 Äqu./100 g), sind aber nicht auf diese beschränkt. Beispiele bevorzugter Epoxidharze sind flüssige Zusammensetzungen, die auf 2,4-Dimethylenphenolglycidylether, 2,6-Dimethylenphenolglycidylether und Gemischen hiervon basieren.

Ein polymeres Gemisch, das auf 2,4-Dimethylenphenolglycidylether-Monomer und 2,6-Dimethylenphenolglycidylether-Monomer basiert, wird bevorzugt. Die Epoxidharzkomponente wird in der Epoxidharzzusammensetzung in einer Menge von etwa 60 bis 90 Gew.-%, vorzugsweise in einer Menge von etwa 80 bis 90 Gew.-%, vorzugsweise in einer Menge von etwa 85 Gew.-% der gesamten Epoxidharzzusammensetzung bereitgestellt.

Das Epoxid-Verdünnungsmittel ist vorzugsweise eine Glycidylterminierte Verbindung. Besonders bevorzugt sind Verbindungen, die Glycidyl- oder Methylglycidylgruppen enthalten, die direkt an ein Atom von Sauerstoff, Stickstoff oder Schwefel gebunden sind. Die Harze umfassen Polyglycidyl- und Poly(methylglycidyl)ester, die durch die Umsetzung einer Substanz, die zwei oder mehr Carbonsäuregruppen pro Molekül enthält, mit Epichlorhydrin, Glyceroldichlorhydrin oder Methylepichlorhydrin in Gegenwart von Alkali, erhältlich sind.

Die Polyglycidylester können aus aliphatischen Carbonsäuren erhalten werden, zum Beispiel Oxalsäure, Bersteinsäure, Adipinsäure, Sebacinsäure oder dimerisierte oder trimerisierte Linolinsäure, aus cycloaliphatischen Carbonsäuren wie Hexahydrophthal-, 4-Methylhexahyrdophthal-, Tetrahydrophthal- und 4-Methyltetrahydrophthalsäure oder aus aromatischen Carbonsäuren wie Phthalsäure, Isophthalsäure und Terephthalsäure stammen.

Andere Epoxidharze, die verwendet werden können, umfassen Polyglycidyl- und Poly(methylglycidyl)ether, die durch die Umsetzung von Substanzen, die pro Molekül zwei oder mehr alkoholische Hydroxygruppen, oder zwei oder mehr phenolische Hydroxyguppen enthalten, mit Epichlorhydrin, Glyceroldichlorhydrin, oder Methylepichlorhydrin, unter alkalischen Bedingungen oder, alternativ, in Gegenwart eines Säurekatalysators mit anschließender Alkalibehandlung erhältlich sind. Solche Polyglycidylether können aus aliphatischen Alkoholen, zum Beispiel Ethylenglycol und Poly(oxyethylen)glycolen wie Diethylenglycol und Triethylenglycol, Propylenglycol und Poly(oxypropylen)glycolen, Propan-1,3-diol, Butan-1,4-diol, Pentan-1,5-diol, Hexan-1,6-diol, Hexan-2,4,6-triol, Glycerol, 1,1,1-Trimethylolpropan, und Pentaerythritol; aus cycloaliphatiaschen Alkoholen, wie Chinit, 1,1-Bis(hydroxymethylcyclohex-3-en, Bis(4-hydroxycyclohexyl)methan, und 2,2-Bis(4-hydroxycyclohexyl)-propan oder aus Alkoholen, die einen aromatischen Kern enthalten, wie N,N-Bis-(2-hydroxyethyl)anilin und 4,4'-Bis(2-hydroxyethylamino)diphenylmethan stammen.

Vorzugsweise stammen die Polyglycidylether aus Substanzen, die zwei oder mehr phenolische Hydroxygruppen pro Molekül enthalten, zum Beispiel Resorcinol, Catechol, Hydrochinon, Bis(4-hydroxyphenyl)methan, 1,1,2,2-Tetrakis(4-hydroxyphenyl)ethan, 4,4'-Dihydroxydiphenyl, Bis(4-hydroxyphenyl)sulphon und insbesondere Phenol-Formaldehyd- oder Kresol-Formaldehyd-Novolakharze, 2,2-Bis(4-hydroxyphenyl)propan (auch als Bisphenol A bekannt) und 2,2-Bis(3,5-dibrom-4-hydroxyphenyl)-propan.

Ferner können Poly(N-glycidyl)Verbindungen verwendet werden, die beispielsweise durch die Dehydrochlorierung der Reaktionsprodukte von Epichlorhydrin und Aminen, die zumindest zwei Wasserstoffatome enthalten, die direkt an Stickstoff gebunden sind, wie Anilin, n-Butylamin, Bis(4-aminophenyl)methan, Bis(4-aminophenyl)sulphon und Bis(4-methylaminophenyl)methan, erhalten werden. Andere Poly(N-glycidyl)-Verbindungen, die verwendet werden können, umfassen Triglycidylisocyanurat, N,N'-Diglycidylderivate von cyclischen Alkylenharnstoffen wie Ethylenharnstoffund 1,3-Propylenharnstoff und N,N'-Diglycidylderivate von Hydantoinen wie 5,5-Dimethylhydantoin. Epoxidharze, die durch die Epoxidation von cyclischen und acrylischen Polyolefinen erhalten wurden, können ebenso verwendet werden, wie Vinylcyclohexendioxid, Limonendioxid, Dicyclopentadiendioxid, 3,4-Epoxydihydrodicyclopentadienylglycidylether, der Bis(3,4-epoxydihydrodicyclopentadienyl)ether von Ethylenglycol, 3,4-Epoxycyclohexylmethyl, 3,4'-Epoxycyclohexancarboxylat und sein 6,6'-Dimethylderivat, das Bis(3,4-Epoxycyclohexancarboxylat) von Ethylenglycol, das Acetal, das zwischen 3,4-Epoxycyclohexancarboxyaldehyd und 1,1-Bis(hydroxymethyl)-3,4-epoxycyclohexan gebildet wurde, Bis(2,3-Epoxycyclopentyl)ether, und epoxidiertes Butadien oder Copolymere von Butadien mit ethylenischen Verbindungen wie Styren und Vinylacetat.

Geeignete aliphatische oder aromatische Epoxidharzverdünnungsmittel sind ferner Butandioldiglycidylether, Diglycidylether von ortho-Toluidin, Diglycidylether von Neopentylglycol. Ein besonders bevorzugtes Epoxidverdünnungsmittel ist 1,4-Diglycidyloxybutan. Epoxyverdünnungsmittel-Komponenten sind kommerziell erhältlich, wie Araldite®DY 026SP, von Ciba Specialty Chemicals Corporation.

Die Epoxidverdünnungsmittel-Komponente wird in der Epoxidharzzusammensetzung in einer Menge von etwa 5 bis etwa 12 Gew.-%, vorzugsweise in einer Menge von etwa 8 bis etwa 10 Gew.-%, vorzugsweise in einer Menge von etwa 9 Gew.-% der gesamten Epoxidharzzusammensetzung bereitgestellt.

Die latente Vernetzungsmittel-Komponente wird vorzugsweise bei einer Temperatur zwischen 82°C (180°F) und 121°C (250°C) aktiviert. Beispiele geeigneter latenter Vernetzungsmittel umfassen Bortrichloridamin-Komplexe. Das am stärksten bevorzugte latente Vernetzungsmittel ist ein Bortrichloridaminkomplex, der unter dem Markennamen DY 9577, von Ciba Specialty Chemicals Corporation, Tarrytown, New York erhältlich ist. Viele Bortrichloridaminkomplexe sind kommerziell erhältlich.

Die latente Vernetzungsmittelkomponete wird in der Epoxidharzzusammensetzung in einer Menge von etwa 1 bis etwa 10 Gew.-%, vorzugsweise in einer Menge von etwa 3 bis etwa 7 Gew.-% , vorzugsweise in einer Menge von etwa 5 Gew.-% der gesamten Epoxidharzzusammensetzung bereitgestellt.

Bei dem Verbundwerkstoff kann es sich auch um PU-Hartschaum mit niedriger Wärmeleitfähigkeit handeln. Des Weiteren können auch Duroplaste, oder andere Materialien mit niedriger Wärmeleitfähigkeit verwendet werden.

Als Beimengungen des Verbundwerkstoffes können etwa Materialien wie Glasfasern, Talkum, Quarzsand, Kalziumkarbonat, Titandioxid, Bariumsulfat und Vollglas- oder Glashohlkugeln (zur Gewichtsreduktion) verwendet werden. Der sogenannte Kugellager-Effekt der Miniatur-Kügelchen sorgt für bessere Fließeigenschaften des Verbundwerkstoffs. Gleichmäßigere Oberflächen-Strukturen sind ein weiterer positiver Effekt, ebenso wie die Möglichkeit der Produktionssteigerung durch geringeren Schrumpf und Verzug.

Ein wichtiger Aspekt der vorliegenden Erfindung ist, dass die verwendete Zusammensetzung für den Verbundwerkstoff bei Raumtemperatur stabil ist und fähig ist, bei einer Temperatur von zwischen 93,3 und 121,1°C (200 und 250°F) zu härten. Demgemäß enthält die Zusammensetzung kein anderes Vernetzungsmittel, als ein latentes Vernetzungsmittel oder Gemische latenter Vernetzungsmittel, die die Stabilität vermindern oder die Härtungstemperatur verringern würden. Außerdem ist ein weiterer Aspekt der vorliegenden Erfindung, dass die Zusammensetzung eine Viskosität von etwa 10.000 mPa·s (10.000 cP) bei 25°C aufweist, 800 mPa·s (800 cP) bei 50°C, oder 200 mPa.s (200 cP) bei 70°C. Gegebenenfalls können Füllstoffe wie Schaumdämpfer und dergleichen beigemengt werden. Zur Beeinflussung der Verarbeitbarkeit, der Struktur und der Eigenschaften des Verbundwerkstoffes können neben Füll- und Verstärkungsstoffen u.a. auch Funktionszusatzstoffe wie Antioxidantien, Lichtschutzmittel, UV-Stabilisatoren, Thermostabilisatoren, Flammschutzmittel, Gleitmittel, Schlagzähigkeitsverbesserer, Flexibilisatoren, Farbmittel wie Pigmente und Farbstoffe, Biostabilisatoren wie pilz- und mikrobentötende Zusatzstoffe, Fungizide, Treibmittel, Nukleierungsmittel, Vernetzungsmittel und Haftvermittler zugegeben werden. Hierdurch können spezifische Eigenschaften der Verbundwerkstoffe, wie z. B. Feuchtebeständigkeit oder eine geringe Entflammbarkeit, gezielt eingestellt werden.

Die oben beschriebenen Zusammensetzungen sind relativ leicht zu verarbeiten, haben bei Raumtemperatur eine lange Lagerstabilität, erzeugen Zusammensetzungen mit einer hohen Glasübergangstemperatur (148,9-160,0°C oder 300-320°F), härten bei einer Temperatur von 93,3°C (200°F), und haben selbst bei 70°C eine lange Latenzzeit.

Eine Ausführungsform des erfindungsgemäßen Verfahrens kann somit wie folgt angegeben werden:
a) Bereitstellen einer Form mit einer oder mehreren Kavitäten
b) Injizieren eines Verbundwerkstoffs umfassend ein Matrixharzes in die Form, wobei das Matrixharz umfast:
   1) ein flüssiges, phenolisches Harz,
   2) ein Glycidyl-terminiertes enthaltendes Verdünnungsmittel,
   3) zumindest ein latentes Vernetzungsmittel, das nur vernetzt, wenn es einer Temperatur von zumindest 93,3°C (200°F) ausgesetzt wird, sowie
   4) Beimengungen aus Naturstoffen oder Recyclingmaterial (Beimengungen von Gesteinsmehl oder zerkleinertem, gepressten Papier bis zu 40% der Gesamtmenge des Verbundwerkstoffes haben sich bei Versuchen als möglich erwiesen)
c) Einbringen des transparenten Verbundwerkstoffes über Spritz- oder Druckguss
d)Wechseln des oberen Teiles der ersten Form und Positionierung einer zweiten Form mit einem Schmelzkern, um anschließend die Umrandung sowie Boden- und Deckteile des Isolierformteils mit Harz und Recyclingmaterial und integrierten Folienstücke zur UV-Strahlungsreduktion zu umspritzen.
e) Entfernen des Schmelzkerns nach dem Entformen im Schmelzbad über die Öffnungen, über die die Hohlräume der Kammern 3 mit dem Äußeren in Verbindung stehen
f) Erzeugen von Unterdruck in den Hohlräumen der Kammern 3 über die Öffnungen 1 und Verschließen und Abdichten der Öffnungen 1 mit Vulkanisiermaterial
g) Erhitzen der Form auf mindestens 93,3°C (200°F) für einen ausreichenden Zeitraum, um zumindest einen teilweise gehärteten, festen Isolierformteil herzustellen.
h) Entnahme des Isolierformteils aus der Form und Aushärtung unter UV-Strahlung. Das Matrixharz härtet, während es dem Vakuum ausgesetzt ist. Die Anwendung des Vakuums entzieht jegliche während des Härtungsverfahrens erzeugten Dämpfe.

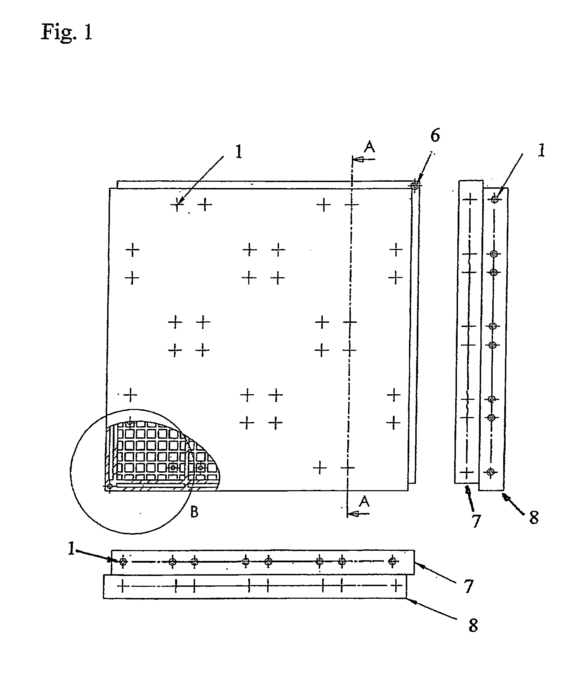

Das Ergebnis des erfindungsgemäßen Verfahrens ist ein Isolierformteil, wie er etwa in den Fig. 1 bis 5 dargestellt ist. Die Fig. 1 zeigt hierbei eine Darstellung einer Ausführungsform eines erfindungsgemäßen Isolierformteils in drei unterschiedlichen Ansichten, wobei die Öffnungen 1 ersichtlich sind, über die der Schmelzkern aus den Hohlräumen der Kammern 3 entfernt wird, und über die anschließend die Kammern 3 evakuiert werden. Mehrere Kammern 3, im gezeigten Ausführungsbeispiel sechzehn Kammern 3, bauen somit den Isolierformteil auf, wobei sie jeweils voneinander über Stege 4 luftdicht voneinander abgetrennt sind. Die Durchbrüche 6 stellen Befestigungslöcher dar.

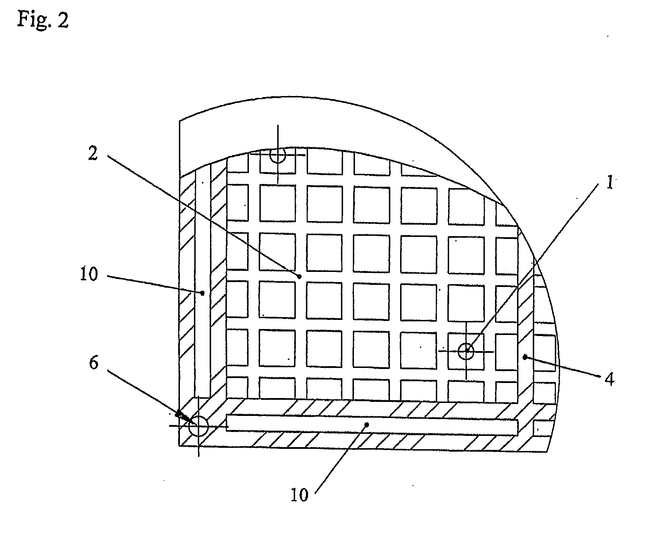

Die Fig. 2 zeigt eine vergrößerte Darstellung der Innenansicht in der linken, unteren Ecke der Fig. 1, in der eine Kammer 3 und den Stegen 4 deutlich ersichtlich sind. Des Weiteren kann der Fig. 2 entnommen werden, dass die Öffnungen 1 im gezeigten Ausführungsbeispiel so gewählt sind, dass je Kammer 3 zwei Öffnungen 1 vorgesehen sind, die diametral innerhalb der Kammer 3 angeordnet sind. Die Oberflächen der Kammern 3 weisen dabei erhabene Oberflächenabschnitte 2 auf.

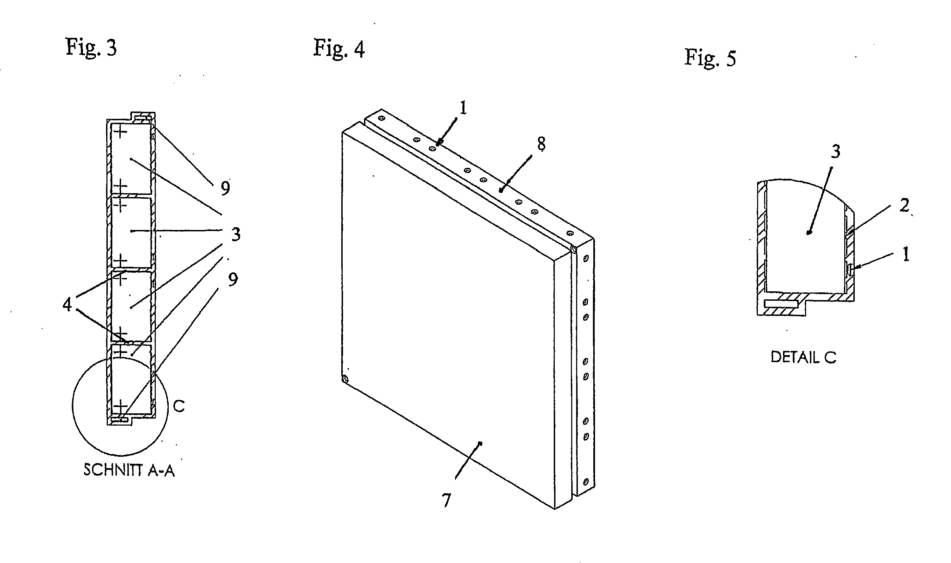

Die Fig. 3 zeigt eine Schnittansicht entlang der Linie A-A in der Fig. 1, wobei die einzelnen, über Stege 4 luftdicht voneinander abgetrennten Kammern 3 erkennbar sind. Der Oberteil 7 und der Unterteil 8 sind im gezeigten Ausführungsbeispiel jeweils quaderförmig ausgeführt, wobei der Oberteil 7 gegenüber dem Unterteil 8 geringfügig in diagonaler Richtung verschoben ist. Dadurch bildet sich eine umlaufende Schulter 9 aus, die eine überlappende Montage mehrerer aneinander liegender Isolierformteile ermöglicht.

In der Fig. 4 ist eine perspektivische Ansicht eines erfindungsgemäßen Isolierformteils mit einem Oberteil 7, der als Dekoroberfläche ausgeführt sein kann, sowie einem Unterteil 8 dargestellt. Des Weiteren ist die umlaufende Schulter 9 mit den Befestigungslöchern in Form der Durchbrüche 6 ersichtlich.

Gemäß einer weiteren Ausführungsform eines Verfahren zur Herstellung eines erfindungsgemäßen Isolierformteils mit einem Oberteil 7 und einem Unterteil 8 kann auch vorgesehen sein, dass in einem ersten Verfahrensschritt im Rahmen eines Spritz- oder Druckgussverfahren der Verbundwerkstoff des Oberteils 7, sowie des Unterteils 8, jeweils mit Beimengungen aus Naturstoffen oder Recyclingmaterial, in eine dreiteilige Form eingebracht wird. Der Unterteil 8 wird dabei in einer unteren Formhälfte, und der Oberteil 7 in einer oberen Formhälfte unter Anwesenheit eines mittleren Formenteils geformt. Dabei wird einerseits der Unterteil 8 mit dem Boden und den Seitenwänden gespritzt, sowie gleichzeitig der Oberteil 7. In einem zweiten Verfahrensschritt wird die Form geöffnet, und der mittlere Formenteil entnommen. Dadurch werden der Oberteil 7 und der Unterteil 8 jeweils auf einer ihrer Seiten entformt, verbleiben jedoch in ihren jeweiligen Formhälften. In einem dritten Verfahrensschritt werden die beiden Formenhälften wieder geschlossen, wodurch der Oberteil 7 und der Unterteil 8 aneinander gepresst werden und der jeweilige Verbundwerkstoff miteinander vernetzt wird. Der erste und der zweite Verfahrensschritt müssen dabei ausreichend rasch durchgeführt werden, sodass der Oberteil 7 und der Unterteil 8 vor dem dritten Verfahrenschritt noch im vernetzbaren Zustand vorliegen.

Dieses Herstellungsverfahren wird bevorzugt innerhalb eines unter Unterdruck stehenden Produktionsraumes durchgeführt, da in diesem Fall die nachträgliche Evakuierung der Kammern 3 entfallen kann. Hierbei steht die Spritz- oder Druckgussmaschine in einem abgedichteten Raum, der unter Unterdruck, etwa bei 3mbar gehalten wird, und über entsprechende Schleusen zugänglich ist.

Des Weiteren können auch RIM-Verfahren (Reaktion-Injektions-Moulding) angewendet werden, und zwar sowohl im Niederdruck- als auch im Hochdruckbereich.

Mithilfe der Erfindung werden somit Isolierformteile bereitgestellt, die leicht und kostengünstig herstellbar sind, und dabei über gute Isolierfähigkeit und hohe Stabilität verfügen.

## Patentansprüche

1. Isolierformteil mit einem Oberteil (7) und einem Unterteil (8), **dadurch gekennzeichnet, dass** der Oberteil (7) und der Unterteil (8) als einteiliger Spritz- oder Druckgussteil ausgeführt sind, die in ihrem Inneren Hohlräume aufweisen, die als jeweils voneinander luftdicht abgetrennte Kammern (3) ausgeführt sind, wobei der Oberteil (7) und der Unterteil (8) jeweils quaderförmig ausgeführt sind, und der Oberteil (7) gegenüber dem Unterteil (8) geringfügig in diagonaler Richtung verschoben ist.

2. Isolierformteil nach Anspruch 1, **dadurch gekennzeichnet, dass** in den Kammern (3) ein Unterdruck besteht.

3. Isolierformteil nach Anspruch 1 oder 2, **dadurch gekennzeichnet, dass** der Oberteil (7) aus einem Verbundwerkstoff mit Beimengungen aus Naturstoffen oder Recyclingmaterial gefertigt ist.

4. Isolierformteil nach einem der Ansprüche 1 bis 3, **dadurch gekennzeichnet, dass** der Unterteil (8) aus einem Verbundwerkstoff mit Beimengungen aus Naturstoffen oder Recyclingmaterial gefertigt ist.

5. Isolierformteil nach einem der Ansprüche 1 bis 4, **dadurch gekennzeichnet, dass** es sich bei dem Verbundwerkstoff um PU-Hartschaum mit niedriger Wärmeleitfähigkeit handelt, dem Glashohlkugeln beigemengt sind.

6. Verfahren zur Herstellung eines Isolierformteils mit einem Oberteil (7) und einem Unterteil (8), **dadurch gekennzeichnet, dass** in einem ersten Verfahrensschritt im Rahmen eines Spritz- oder Druckgussverfahren der Verbundwerkstoff des Oberteils (7) mit Beimengungen aus Naturstoffen oder Recyclingmaterial in eine erste Form eingebracht wird, und in einem zweiten Verfahrensschritt im Rahmen eines Schmelzkernverfahren der Verbundwerkstoff des Unterteils (7) mit Beimengungen aus Naturstoffen oder Recyclingmaterial in eine zweite Form eingebracht wird, wobei die zweite Form einen Schmelzkern mit einzelnen Schmelzkörpern enthält, die über Öffnungen (1) in der zweiten Form mit dem Äußeren in Verbindung stehen, und nach dem zweiten Verfahrensschritt die Schmelzkörper zur Bildung einzelner Kammern (3) ausgeschmolzen werden.

7. Verfahren nach Anspruch 6, **dadurch gekennzeichnet, dass** nach dem Ausschmelzen der Schmelzkörper in den Kammern (3) Unterdruck erzeugt wird, und danach ein luftdichter Abschluss der Kammern (3) erfolgt.

8. Verfahren nach Anspruch 6 oder 7, **dadurch gekennzeichnet, dass** der Isolierformteil einer Nachhärtung mittels UV-Strahlung unterzogen wird.

9. Verfahren nach einem der Ansprüche 6 bis 8, **dadurch gekennzeichnet, dass** der Verbundwerkstoff des Oberteils (7) und des Unterteils (8) bei 25°C eine Viskosität von 8.000-12.000 mPa.s (10.000 Centipoise) aufweist.

10. Verfahren nach einem der Ansprüche 6 bis 9, **dadurch gekennzeichnet, dass** der Verbundwerkstoff des Oberteils (7) und des Unterteils (8) bei einer Temperatur zwischen 93,3°C und 121,1°C (200°F und 250°F) erhärtet.

11. Verfahren nach Anspruch 7 oder 8, **dadurch gekennzeichnet, dass** der Verbundwerkstoff des Oberteils (7) und des Unterteils (8) ein Matrixharz umfassend ein flüssiges, phenolisches Harz, ein Glycidyl-terminiertes Epoxid-Verdünnungsmittel, sowie zumindest ein latentes Vernetzungsmittel enthält.

12. Verfahren nach Anspruch 11, **dadurch gekennzeichnet, dass** es sich bei dem Epoxid-Verdünnungsmittel um 1,4-Diglycidyloxybutan handelt.

13. Verfahren nach Anspruch 11, **dadurch gekennzeichnet, dass** das latente Vernetzungsmittel bei einer Temperatur zwischen 82°C und 121°C (180°F und 250°C) aktiviert wird.

14. Verfahren nach Anspruch 13, **dadurch gekennzeichnet, dass** es sich bei dem latenten Vernetzungsmittel um Bortrichloridamin-Komplexe handelt.

15. Verfahren nach einem der Ansprüche 11 bis 14, **dadurch gekennzeichnet, dass** das Epoxid-Verdünnungsmittel in einer Menge von 5-12 Gew.-%, vorzugsweise in einer Menge von 8-10 Gew.-%, vorzugsweise in einer Menge von 9 Gew.-%, der Gesamtmenge des Matrixharzes enthalten ist.

16. Verfahren nach einem der Ansprüche 11 bis 15, **dadurch gekennzeichnet, dass** das latente Vernetzungsmittel in einer Menge von 1-10 Gew.-%, vorzugsweise in einer Menge von 3-7 Gew.-%, vorzugsweise in einer Menge von 5 Gew.-%, der Gesamtmenge des Matrixharzes enthalten ist.

## Claims

1. An insulating molded part, comprising an upper part (7) and a bottom part (8), **characterized in that** the upper part (7) and the bottom part (8) are arranged as an integral injection-molded or die-cast part which comprise cavities in their interior which are respectively arranged as chambers (3) which are separated from one another in an air-tight fashion, with the upper part (7) and the bottom part (8) respectively being arranged in a cuboid manner, and the upper part (7) is displaced slightly in the diagonal direction in relation to the bottom part (8).

2. An insulating molded part according to claim 1, **characterized in that** there is a negative pressure in the chambers (3).

3. An insulating molded part according to claim 1 or 2, **characterized in that** the upper part (7) is made of a composite material with additions of natural materials or recycling materials.

4. An insulating molded part according to one of the claims 1 to 3, **characterized in that** the bottom part (8) is made of a composite material with additions of natural materials or recycling materials.

5. An insulating molded part according to one of the claims 1 to 4, **characterized in that** the composite material concerns PU rigid foam of low thermal conductivity, to which hollow glass balls have been added.

6. A method for producing an insulating molded part, comprising an upper part (7) and a bottom part (8), **characterized in that** in a first method step within the scope of an injection-molding or die-casting process the composite material of the upper part (7) is introduced with additions of natural materials or recycling materials into a first mold, and in a second method step within the scope of fusible core process the composite material of the bottom part (7) is introduced with additions of natural materials or recycling materials into a second mold, with the second mold containing a fusible core with individual fusible bodies which are in connection with the exterior via openings (1) in the second mold, and the fusible bodies are molten out after the second method step for forming individual chambers (3).

7. A method according to claim 6, **characterized in that** a negative pressure is produced after the melting out of the fusible bodies in the chambers (3) and thereafter air-tight sealing of the chambers (3) occurs.

8. A method according to claim 6 or 7, **characterized in that** the insulating molded part is subjected to after-curing by means of UV radiation.

9. A method according to one of the claims 6 to 8, **characterized in that** the composite material of the upper part (7) and the bottom part (8) has a viscosity of 8,000-12,000 mPa.s (10,000 Centipoise) at 25°C.

10. A method according to one of the claims 6 to 9, **characterized in that** the composite material of the upper part (7) and the bottom part (8) cures at a temperature of between 93.3°C and 121.1°C (200°F and 250°F).

11. A method according to claim 7 or 8, **characterized in that** the composite material of the upper part (7) and the bottom part (8) contains a matrix resin comprising a fluid phenolic resin, a glycidyl-terminated epoxy diluent, and at least one latent cross-linking agent.

12. A method according to claim 11, **characterized in that** the epoxy diluent concerns 1,4-diglycidyl oxybutane.

13. A method according to claim 11, **characterized in that** the latent cross-linking agent is activated at a temperature of between 82°C and 121°C (180°F and 250°F).

14. A method according to claim 13, **characterized in that** the latent cross-linking agent concerns boron trichloride amine complexes.

15. A method according to one of the claims 11 to 14, **characterized in that** the epoxy diluent is contained in a quantity of 5 to 12% by weight, preferably in a quantity of 8 to 10% by weight, preferably in a quantity of 9% by weight of the total quantity of the matrix resin.

16. A method according to one of the claims 11 to 15, **characterized in that** the latent cross-linking agent is contained in a quantity of 1 to 10% by weight, preferably in quantity of 3 to 7% by weight, preferably in a quantity of 5% by weight of the total quantity of matrix resin.

## Revendications

1. Pièce moulée isolante avec une partie supérieure (7) et une partie inférieure (8), **caractérisée en ce que** la partie supérieure (7) et la partie inférieure (8) sont réalisées comme une pièce moulée par injection ou sous pression d'une seule pièce, présentant à l'intérieur des cavités réalisées comme des compartiments (3) séparés les uns des autres de façon étanche à l'air, la partie supérieure (7) et la partie inférieure (8) étant chacune de forme carrée et la partie supérieure (7) étant légèrement décalée en diagonale par rapport à la partie inférieure (8).

2. Pièce moulée isolante selon la revendication 1, **caractérisée en ce qu'**une dépression règne dans les compartiments (3).

3. Pièce moulée isolante selon la revendication 1 ou 2, **caractérisée en ce que** la partie supérieure (7) est faite d'un matériau composite avec des ajouts de matières naturelles ou de matériau recyclé.

4. Pièce moulée isolante selon l'une des revendications 1 à 3, **caractérisée en ce que** la partie inférieure (8) est faite d'un matériau avec des ajouts de matières naturelles ou de matériau recyclé.

5. Pièce moulée isolante selon l'une des revendications 1 à 4, **caractérisée en ce que** le matériau composite est une mousse de polyuréthane dure à faible conductibilité thermique, à laquelle des billes creuses en verre sont mélangées.

6. Procédé pour la fabrication d'une pièce moulée isolante avec une partie supérieure (7) et une partie inférieure (8), **caractérisé en ce que** dans une première étape de procédé, dans le cadre d'un procédé de moulage par injection ou sous pression, le matériau composite de la partie supérieure (7) est introduit avec des ajouts de matières naturelles ou de matériau recyclé dans un premier moule, et dans une deuxième étape de procédé, dans le cadre d'un procédé avec noyau fusible, le matériau composite de la partie inférieure (7) est introduit avec des ajouts de matières naturelles ou de matériau recyclé dans un deuxième moule, ce deuxième moule contenant un noyau fusible avec des éléments fusibles distincts, qui communiquent avec l'extérieur par des ouvertures (1) dans la deuxième forme, et les éléments fusibles étant fondus après la deuxième étape de procédé pour former des compartiments (3) distincts.

7. Procédé selon la revendication 6, **caractérisé en ce qu'**après la fusion des éléments fusibles, une dépression est créée dans les compartiments (3) et les compartiments (3) sont ensuite fermés de façon étanche à l' air.

8. Procédé selon la revendication 6 ou 7, **caractérisé en ce que** la pièce moulée isolante est encore durcie au moyen d'un rayonnement UV.

9. Procédé selon l'une des revendications 6 à 8, **caractérisé en ce que** le matériau composite de la partie supérieure (7) et de la partie inférieure (8) présente à 25°C une viscosité de 8000-12 000 mPa.s (10 000 centipoises).

10. Procédé selon l'une des revendications 6 à 9, **caractérisé en ce que** le matériau composite de la partie supérieure (7) et de la partie inférieure (8) durcit à une température comprise entre 93,3°C et 121,1°C (200°F et 250°F).

11. Procédé selon la revendication 7 ou 8, **caractérisé en ce que** le matériau composite de la partie supérieure (7) et de la partie inférieure (8) contient une résine de matrice comprenant une résine phénolique liquide, un diluant époxy à terminaison glycidyle et au moins un agent mouillant latent.

12. Procédé selon la revendication 11, **caractérisé en ce que** le diluant époxy est du 1,4-diglycidyloxybutane.

13. Procédé selon la revendication 11, **caractérisé en ce que** l'agent mouillant latent est activé à une température comprise entre 82°C et 121°C (180°F et 250°C).

14. Procédé selon la revendication 13, **caractérisé en ce que** l'agent mouillant latent est composé de complexes de borotrichloramine.

15. Procédé selon l'une des revendications 11 à 14, **caractérisé en ce que** le diluant époxy est présent à raison de 5-12 % en poids, de préférence à raison de 8-10 % en poids, de préférence à raison de 9 % en poids par rapport à la quantité totale de la résine de matrice.

16. Procédé selon l'une des revendications 11 à 15, **caractérisé en ce que** l'agent mouillant latent est présent à raison de 1-10 % en poids, de préférence à raison de 3-7 % en poids, de préférence à raison de 5 % en poids par rapport à la quantité totale de la résine de matrice.
